# EUROPÄISCHE PATENTANMELDUNG

(11) **EP 4 703 618 A1**
(43) Veröffentlichungstag der Anmeldung: **04.03.2026**
(21) Anmeldenummer: 25198604.8
(22) Anmeldetag: 28.08.2025
(51) Int. Cl.: F16L 37/088, F16L 37/14

(54) **SICHERUNGSHÜLSE, VERBINDUNGSSYSTEM SOWIE VERFAHREN ZUR HERSTELLUNG EINES VERBINDUNGSSYSTEMS**

(30) Priorität: 30.08.2024 AT 507122024
(71) Anmelder: Henn GmbH & Co KG., 6850 Dornbirn (AT)
(72) Erfinder: Rohner, Manuel, 6841 Mäder (AT)
(74) Vertreter: Burger, Hannes Alfred

(57) **Zusammenfassung**

Die Erfindung betrifft eine Sicherungshülse (1) für eine, zur Verbindung eines ersten Bauteils mit einem zweiten Bauteil ausgebildeten, Verbindungshülse (2), wobei die Sicherungshülse (1) ein offenes erstes Sicherungshülsenende (3) und ein mit dem ersten Sicherungshülsenende (3) verbundenes offenes zweites Sicherungshülsenende (4) aufweist, wobei an einer äußeren Umfangsfläche (5) der Sicherungshülse (1) zumindest ein Verdrehsicherungsvorsprung (6) vorgesehen ist, der integral mit der Sicherungshülse (1) ausgebildet ist, wobei der Verdrehsicherungsvorsprung (6) in einer radialen Richtung von der äußeren Umfangsfläche (5) absteht und sich in einer Längsrichtung zumindest über einen Teil einer Länge der Sicherungshülse (1) erstreckt, dass die Sicherungshülse (1) zumindest eine Arretierungsausnehmung (7) umfasst, welche die äußere Umfangsfläche (5) der Sicherungshülse (1) mit einer inneren Umfangsfläche (8) verbindet, wobei die zumindest eine Arretierungsausnehmung (7) in Umfangsrichtung von dem zumindest einen Verdrehsicherungsvorsprung (6) beabstandet ist und wobei die Sicherungshülse (1) dazu ausgebildet ist, an einer äußeren Umfangsfläche der Verbindungshülse (2) angeordnet und mittels einer kraftschlüssigen Verbindung und/oder einer formschlüssigen Verbindung mit der Verbindungshülse (2) verbunden zu werden.

## Beschreibung

Die Erfindung betrifft eine Sicherungshülse für eine, zur Verbindung eines ersten Bauteils mit einem zweiten Bauteil ausgebildeten, Verbindungshülse, ein Verbindungssystem umfassend eine Sicherungshülse und eine Verbindungshülse sowie ein Verfahren zur Herstellung eines solchen Verbindungssystems.

Gattungsgemäße Verbindungssysteme werden in verschiedensten industriellen Anwendungsbereichen dazu verwendet, um Bauteile zu verbinden. Insbesondere werden derartige Verbindungssysteme zur fluidischen Verbindung von fluidführenden Bauteilen verwendet, beispielsweise Fluid-Behälter oder Fluidleitungen. Alternativ zu Fluiden (Gasen, Flüssigkeiten) könnten aber ggf. auch Feststoffe wie beispielsweise Pulver oder Granulat durch ein Verbindungssystem gefördert werden.

Das Verbindungssystem umfasst in der Regel eine Verbindungshülse, die an einem Ende mit einem ersten Bauteil, z.B. einer Fluidleitung oder einem Behälter, verbunden werden kann. Am gegenüberliegenden Ende kann die Verbindungshülse, beispielsweise unmittelbar oder mittels eines geeigneten Steckverbinders oder einer geeigneten Kupplung, mit einem zweiten Bauteil, z.B. wiederum einer Fluidleitung oder einem Behälter, verbunden werden. Die Verbindung mit der ersten Fluidleitung ist in der Regel fest, also nach dem Herstellen der Verbindung bestimmungsgemäß nicht mehr lösbar. Die Verbindung mit der weiteren Fluidleitung kann je nach konkreter Anwendung fest oder lösbar sein.

Insbesondere wenn die Verbindungshülse dazu ausgebildet ist, über einen Steckverbinder mit einem Bauteil verbunden zu werden, ist es oftmals erwünscht, dass eine Verdrehsicherung zwischen dem Steckverbinder und der Verbindungshülse vorgesehen ist. Zudem kann es erwünscht sein, dass die Einsteckhülse an der Verbindungshülse arretiert werden kann, um ein unerwünschtes Lösen zu verhindern.

Eine gattungsgemäßes Verbindungshülse zur Verbindung mit einem Steckverbinder ist beispielsweise in WO 2022/155694 A1 unter der Bezeichnung "Gegensteckverbinder" offenbart. Die offenbarte Verbindungshülse weist eine integrale Lasche auf, die als Verdrehsicherung dient und eine Nut zur Aufnahme eines Arretierungselements eines Steckverbinders.

Nachteilig hierbei ist, dass die Verbindungshülse relativ komplex aufgebaut ist und damit teuer in der Herstellung ist.

Es war eine Aufgabe der gegenständlichen Erfindung, eine Sicherungshülse sowie ein Verbindungssystem bereitzustellen, die flexibel in der Verwendung sind und die möglichst einfach aufgebaut und kostengünstig herstellbar sind.

Die Aufgabe wird mit der eingangs genannten Sicherungshülse dadurch gelöst, dass die Sicherungshülse ein offenes erstes Sicherungshülsenende und ein mit dem ersten Sicherungshülsenende verbundenes offenes zweites Sicherungshülsenende aufweist, dass an einer äußeren Umfangsfläche der Sicherungshülse zumindest ein Verdrehsicherungsvorsprung vorgesehen ist, der integral mit der Sicherungshülse ausgebildet ist, wobei der Verdrehsicherungsvorsprung in einer radialen Richtung von der äußeren Umfangsfläche absteht und sich in einer Längsrichtung zumindest über einen Teil einer Länge der Sicherungshülse erstreckt, dass die Sicherungshülse zumindest eine Arretierungsausnehmung umfasst, welche die äußere Umfangsfläche der Sicherungshülse mit einer inneren Umfangsfläche verbindet, wobei die zumindest eine Arretierungsausnehmung in Umfangsrichtung von dem zumindest einen Verdrehsicherungsvorsprung beabstandet ist und dass die Sicherungshülse dazu ausgebildet ist, an einer äußeren Umfangsfläche der Verbindungshülse angeordnet und mittels einer kraftschlüssigen Verbindung und/oder einer formschlüssigen Verbindung mit der Verbindungshülse verbunden zu werden. Die Sicherungshülse kann in einfacher Weise mit einer Verbindungshülse zu einem Verbindungssystem kombiniert werden, das eine Verdrehsicherung und eine Arretierung ermöglicht. Ein Vorteil gegenüber bekannten Systemen besteht insbesondere darin, dass das Verbindungssystem aus zwei relativ einfach aufgebauten Bauteilen besteht und damit sehr kostengünstig herstellbar ist.

Vorzugsweise ist die Sicherungshülse aus einem metallischen Werkstoff. Dadurch kann eine sehr robuste Sicherungshülse bereitgestellt werden, die eine dauerhaft zuverlässige Verdrehsicherung und Arretierung erlaubt. Es ist dabei vorteilhaft, wenn die metallische Sicherungshülse ein Blechumformteil mit einer im Wesentlichen konstanten Wandstärke ist. Dadurch ist die Sicherungshülse einfach und kostengünstig herstellbar. "im Wesentlichen konstant" bedeutet, dass die Sicherungshülse ggf. fertigungsbedingte Schwankungen der Wandstärke aufweisen kann. Alternativ kann die metallische Sicherungshülse auch ein Kaltfließpressteil oder ein Gussteil sein.

Alternativ zur metallischen Ausführung kann die Sicherungshülse auch aus einem Kunststoff ausgebildet sein, wodurch eine kostengünstige Herstellung und eine flexible Formgebung ermöglicht werden. Die Sicherungshülse kann beispielsweise ein Spritzgussteil sein.

Gemäß einer vorteilhaften Ausführungsform ist die Sicherungshülse einteilig ausgebildet, wodurch eine kostengünstige Herstellung und eine stabile Befestigung an der Verbindungshülse ermöglicht werden. Optional kann die Sicherungshülse jedoch auch mehrteilig ausgebildet sein. Beispielsweise kann die Sicherungshülse mehrere Bauteile umfassen, die zusammengefügt werden können, um die Sicherungshülse auszubilden. Es wäre beispielsweise denkbar, dass die Sicherungshülse zwei Halbschalen umfasst, die in radialer Richtung zusammensteckbar und beispielsweise mittels eines geeigneten Verschlusses, z.B. eines Schnappverschlusses, formschlüssig verbindbar bzw. koppelbar sind. Die Halbschalen könnten beispielsweise auch an einer Seite mittels eines Drehgelenks verbunden sein, das eine parallel zur Mittelachse der Sicherungshülse liegende Drehachse aufweist. An der gegenüberliegenden Seite könnte ein geeigneter Verschluss, z.B. wiederum ein Schnappverschluss, vorgesehen sein. Der Verschluss der Halbschalen kann bestimmungsgemäß lösbar sein, sodass die Halbschalen nach dem Zusammenfügen wieder zerstörungsfrei voneinander lösbar sind. Der Verschluss kann jedoch auch bestimmungsgemäß nicht lösbar sein, sodass die Halbschalen nach dem Zusammenfügen nicht mehr zerstörungsfrei voneinander lösbar sind.

Die Sicherungshülse kann einen in radialer Richtung nach außen gerichteten ersten Umfangskragen umfassen, der die Sicherungshülse in Richtung des ersten Sicherungshülsenendes begrenzt, wobei der erste Umfangskragen eine, dem zweiten Sicherungshülsenende zugewandte Stirnfläche aufweist. Dadurch kann in einfacher Weise ein mechanischer Anschlag für den Steckverbinder geschaffen werden. Wenn die Sicherungshülse ein Blechumformteil ist, dann kann der erste Umfangskragen beispielsweise durch eine Bördelung des ersten Sicherungshülsenendes ausgebildet sein.

Vorzugsweise ist der zumindest eine Verdrehsicherungsvorsprung mit dem ersten Umfangskragen verbunden. Dadurch kann eine hohe Formstabilität erreicht werden.

Die kraftschlüssige Verbindung kann einen Kraftschluss in axialer Richtung und/oder in Umfangsrichtung umfassen, beispielsweise einen Pressverband. Die formschlüssige Verbindung kann einen Formschluss in axialer Richtung und/oder in Umfangsrichtung umfassen, beispielsweise eine Innenpressverbindung oder Nut/Feder-Verbindung. je nach Anforderung kann eine geeignete Verbindungstechnik gewählt werden. Auch eine Kombination von Kraftschluss und Formschluss wäre möglich. Beispielsweise könnte in Umfangsrichtung eine formschlüssige Verbindung vorgesehen sein und in axialer Richtung eine kraftschlüssige Verbindung.

Vorzugsweise weist die Sicherungshülse im Bereich des ersten Sicherungshülsenendes einen ersten Innendurchmesser auf und weist im Bereich des zweiten Sicherungshülsenendes einen relativ zum ersten Innendurchmesser kleineren zweiten Innendurchmesser auf. Dadurch kann die Sicherungshülse mit einer Verbindungshülse mit verschiedenen Außendurchmessern verwendet werden.

Es kann vorteilhaft sein, wenn die Sicherungshülse einen hohlzylindrischen Zentralabschnitt umfasst, der zwischen dem ersten Sicherungshülsenende und dem zweiten Hülsendende liegt und dass ein überwiegender Teil des zumindest einen Verdrehsicherungsvorsprungs und/oder die zumindest eine Arretierungsausnehmung im Bereich des Zentralabschnitts liegen.

Weiters kann es vorteilhaft sein, wenn die Sicherungshülse zwischen dem Zentralabschnitt und dem zweiten Sicherungshülsenende einen, sich in Richtung des zweiten Sicherungshülsenendes verjüngenden Verjüngungsabschnitt umfasst. Ein dem zweiten Sicherungshülsenende zugewandtes Ende des zumindest einen Verdrehsicherungsvorsprungs kann dabei im Bereich des Verjüngungsabschnitts liegen und vom zweiten Sicherungshülsenende beabstandet sein. Der Verjüngungsabschnitt vereinfacht das Aufschieben des Steckverbinders.

Vorzugsweise ist die zumindest eine Arretierungsausnehmung als Umfangsnut ausgebildet, die sich in Umfangsrichtung über einen Teil des Umfangs der Sicherungshülse erstreckt. Alternativ oder zusätzlich kann die zumindest eine Arretierungsausnehmung näher am zweiten Sicherungshülsenende liegen als am ersten Sicherungshülsenende. Dadurch ist die Sicherungshülse geeignet, mit bekannten Arretierungseinrichtungen verwendet zu werden, die Arretierungsklammern mit länglichen Arretierungsabschnitten umfassen.

Es kann vorteilhaft sein, wenn die Sicherungshülse zumindest zwei Arretierungsausnehmungen umfasst, die vorzugsweise in Umfangsrichtung voneinander beabstandet, insbesondere diametral gegenüberliegend, angeordnet sind. Dadurch kann die Arretierung am Steckverbinder verbessert werden.

Es kann ebenso vorteilhaft sein, wenn die Sicherungshülse zumindest zwei Verdrehsicherungsvorsprünge umfasst, die vorzugsweise in Umfangsrichtung voneinander beabstandet, insbesondere diametral gegenüberliegend, angeordnet sind. Dadurch kann die Verdrehsicherung verbessert werden.

Die Sicherungshülse ist vorzugsweise Teil eines Verbindungssystems zur Verbindung eines ersten fluidführenden Bauteils mit einem zweiten fluidführenden Bauteils, wobei das Verbindungssystem zusätzlich zur Sicherungshülse eine Verbindungshülse umfasst, wobei die Verbindungshülse ein offenes erstes Verbindungshülsenende zur Verbindung mit dem ersten Bauteil und ein mit dem ersten Verbindungshülsenende verbundenes offenes zweites Verbindungshülsenende zur Verbindung mit dem zweiten Bauteil umfasst, wobei die Sicherungshülse an einer äußeren Umfangsfläche der Verbindungshülse angeordnet und mittels einer kraftschlüssigen Verbindung und/oder einer formschlüssigen Verbindung mit der Verbindungshülse verbunden ist, wobei das erste Sicherungshülsenende der Sicherungshülse dem ersten Verbindungshülsenende zugewandt ist.

Vorzugsweise ist das erste Sicherungshülsenende der Sicherungshülse vom ersten Verbindungshülsenende der Verbindungshülse beabstandet und das zweite Sicherungshülsenende der Sicherungshülse vom zweiten Verbindungshülsenende der Verbindungshülse beabstandet.

Die Verbindungshülse kann am ersten Verbindungshülsenende einen in radialer Richtung nach außen gerichteten zweiten Umfangskragen umfassen, der die Verbindungshülse in Richtung des ersten Verbindungshülsenendes begrenzt, wobei die Verbindungshülse hierbei vorzugsweise ein metallischer Tiefziehteil ist. Der zweite Umfangskragen erstreckt sich in Umfangsrichtung vorzugsweise um den gesamten Umfang der Verbindungshülse. Der zweite Umfangskragen kann beispielsweise als Flansch zur Verbindung mit einem Behälter dienen.

Die Verbindungshülse kann einen ersten hohlzylindrischen Verbindungshülsenabschnitt mit einem ersten Außendurchmesser und einen zweiten hohlzylindrischen Verbindungshülsenabschnitt mit einem, relativ zum ersten Außendurchmesser kleineren, zweiten Außendurchmesser umfassen, wobei der zweite Verbindungshülsenabschnitt näher am zweiten Verbindungshülsenende liegt als der erste Verbindungshülsenabschnitt und dass die Sicherungshülse, vorzugsweise mit dem hohlzylindrischen Zentralabschnitt, mit dem ersten Verbindungshülsenabschnitt verbunden ist. Dadurch kann in einfacher Weise die Form einer standardisierten VDA-Einsteckhülse nachgebildet werden, sodass das Verbindungssystem zur Verwendung mit bekannten Steckverbindern geeignet ist.

Wenn die Sicherungshülse nach Anspruch 8 ausgebildet ist, kann es vorteilhaft sein, wenn das zweite Sicherungshülsenende der Sicherungshülse im Bereich des zweiten hohlzylindrischen Verbindungshülsenabschnitts der Verbindungshülse liegt und der zweite Innendurchmesser der Sicherungshülse im Wesentlichen dem zweiten Außendurchmesser des zweiten hohlzylindrischen Verbindungshülsenabschnitts der Verbindungshülse entspricht. Dadurch kann ein verbesserter Halt der Sicherungshülse an der Verbindungshülse erreicht werden.

Vorzugsweise ist die Verbindungshülse aus einem Kunststoff hergestellt oder die Verbindungshülse ist aus einem metallischen Werkstoff hergestellt, wobei die Verbindungshülse vorzugsweise ein Blechumformteil ist. Dadurch können in vorteilhafter Weise auch verschiedene Materialien für die Verbindungshülse und die Sicherungshülse verwendet werden.

Das Verbindungssystem wird vorzugsweise hergestellt, indem folgende Schritte durchgeführt werden: Bereitstellung einer erfindungsgemäßen Sicherungshülse, Bereitstellung einer Verbindungshülse mit einem offenen ersten Verbindungshülsenende zur Verbindung mit einem ersten fluidführenden Bauteil und einem mit dem ersten Verbindungshülsenende verbundenen offenen zweiten Verbindungshülsenende zur Verbindung mit einem zweiten fluidführenden Bauteil, Anordnen der Sicherungshülse an einer äußeren Umfangsfläche der Verbindungshülse und kraftschlüssiges und/oder formschlüssiges Verbinden der Sicherungshülse mit der Verbindungshülse derart, dass das erste Sicherungshülsenende der Sicherungshülse dem ersten Verbindungshülsenende der Verbindungshülse zugewandt ist.

Zum besseren Verständnis der Erfindung wird diese anhand der nachfolgenden Figuren näher erläutert.

Es zeigen jeweils in stark vereinfachter, schematischer Darstellung:
- Fig. 1: eine Explosionsdarstellung einer beispielhaften Ausführungsform eines Verbindungssystems in einer perspektivischen Ansicht;
- Fig. 2: ein Längsschnitt des Verbindungssystems in einer Explosionsdarstellung;
- Fig. 3: das Verbindungssystem im montierten Zustand in einer perspektivischen Ansicht;
- Fig. 4: das Verbindungssystem im montierten Zustand in einem Längsschnitt.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

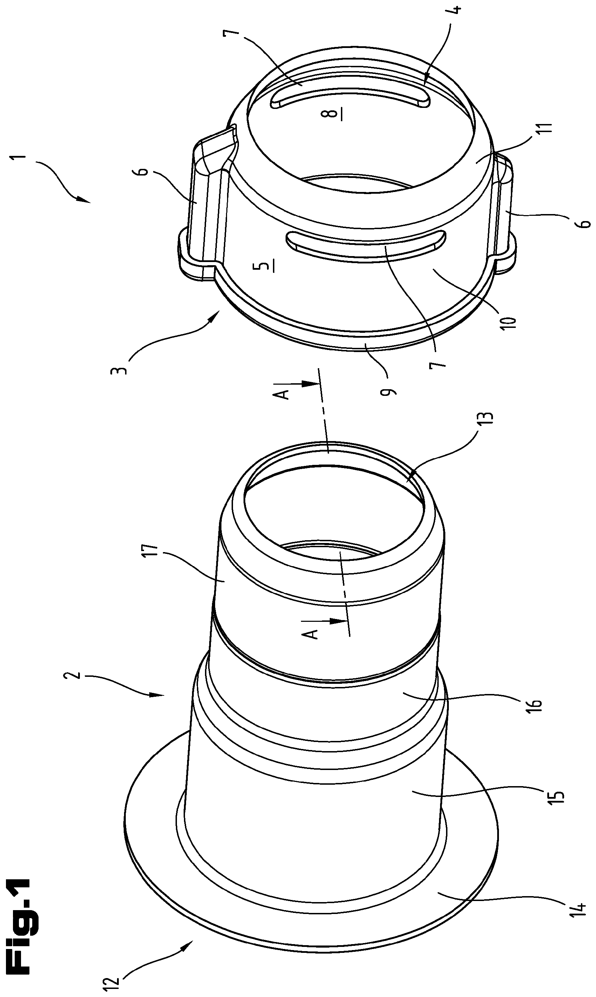

Fig.1 zeigt ein Explosionsdarstellung eines Verbindungssystems einer vorteilhaften Ausführungsform der Erfindung in einer perspektivischen Ansicht. Das Verbindungssystem ist zur Verbindung eines (nicht dargestellten) ersten, insbesondere fluidführenden, Bauteils mit einem (nicht dargestellten), insbesondere fluidführenden, zweiten Bauteil ausgebildet. Das Verbindungssystem umfasst eine Verbindungshülse 2 und eine Sicherungshülse 1. Die Sicherungshülse 1 kann mittels einer kraftschlüssigen und/oder formschlüssigen Verbindung mit der Verbindungshülse 2 verbunden werden. In der dargestellten Ausführungsform ist die Sicherungshülse 1 beispielhaft dazu ausgebildet, sowohl in axialer Richtung als auch in Umfangsrichtung kraftschlüssig mit der Verbindungshülse 2 verbunden zu werden, insbesondere mit einem Pressverband.

Die Sicherungshülse 1 weist ein offenes erstes Sicherungshülsenende 3 und ein mit dem ersten Sicherungshülsenende 3 verbundenes offenes zweites Sicherungshülsenende 4 auf. An einer äußeren Umfangsfläche 5 der Sicherungshülse 1 ist ein Verdrehsicherungsvorsprung 6 vorgesehen, der integral mit der Sicherungshülse 1 ausgebildet ist. Der Verdrehsicherungsvorsprung 6 steht in einer radialen Richtung von der äußeren Umfangsfläche 5 der Sicherungshülse 1 ab und erstreckt sich in einer Längsrichtung zumindest über einen Teil einer Länge der Sicherungshülse 1. Weiters umfasst die Sicherungshülse 1 eine Arretierungsausnehmung 7, welche die äußere Umfangsfläche 5 der Sicherungshülse 1 mit einer inneren Umfangsfläche 8 verbindet. Die Arretierungsausnehmung 7 ist in Umfangsrichtung vom Verdrehsicherungsvorsprung 6 beabstandet.

Gemäß einer vorteilhaften Ausführungsform kann die Sicherungshülse 1 aus einem metallischen Werkstoff ausgebildet sein, beispielsweise aus einem geeigneten Stahl oder Aluminium. Besonders bevorzugt ist die Sicherungshülse 1 ein Blechumformteil mit einer im Wesentlichen konstanten Wandstärke. Beispielsweise kann die Sicherungshülse 1 mittels Tiefziehens hergestellt werden. Die Sicherungshülse 1 kann einstückig ausgebildet sein. Die Arretierungsausnehmung 7 kann beispielsweise mittels Laserschneiden oder Wasserstrahlschneiden hergestellt werden oder auch mittels eines spanenden Verfahrens, z.B. Fräsen. Wenn die Sicherungshülse 1 durch Tiefziehen hergestellt ist, dann wird die Arretierungsausnehmung 7 vorzugsweise im Zuge des Tiefziehprozesses ausgeformt.

Alternativ kann die metallische Sicherungshülse 1 aber auch ein Kaltfließpressteil oder ein Gussteil sein. Die Sicherungshülse 1 könnte aber grundsätzlich auch aus einem geeigneten Kunststoff ausgebildet sein, z.B. als Spritzgussteil.

Wie eingangs erwähnt wurde, könnte die Sicherungshülse 1 entgegen der Darstellung auch mehrteilig ausgebildet sein (in den Figuren nicht dargestellt).

Die Sicherungshülse 1 umfasst im dargestellten Beispiel einen in radialer Richtung nach außen gerichteten ersten Umfangskragen 9. Der erste Umfangskragen 9 begrenzt die Sicherungshülse 1 in Richtung des ersten Sicherungshülsenendes 3. Der erste Umfangskragen 9 weist eine Stirnfläche auf, die dem zweiten Sicherungshülsenende 4 zugewandt ist. Der erste Umfangskragen 9 kann dazu dienen, um einen mechanischen Anschlag für einen (nicht dargestellten) Steckverbinder auszubilden, mit dem das Verbindungssystem verbindbar sein kann. Wie in Fig.1 ersichtlich ist, kann der Verdrehsicherungsvorsprung 6 mit dem ersten Umfangskragen 9 verbunden sein. Dadurch kann die Formstabilität der Sicherungshülse 1 erhöht werden. Wenn die Sicherungshülse 1, wie im dargestellten Beispiel, ein Blechumformteil ist, dann kann der erste Umfangskragen 9 in vorteilhafter Weise durch eine Bördelung des ersten Sicherungshülsenendes 3 ausgebildet sein. Wenn die Sicherungshülse 1 durch Tiefziehen hergestellt ist, dann kann die Bördelung beispielsweise im Zuge eines Tiefziehprozesses hergestellt werden, insbesondere durch Umstülpen des Materials.

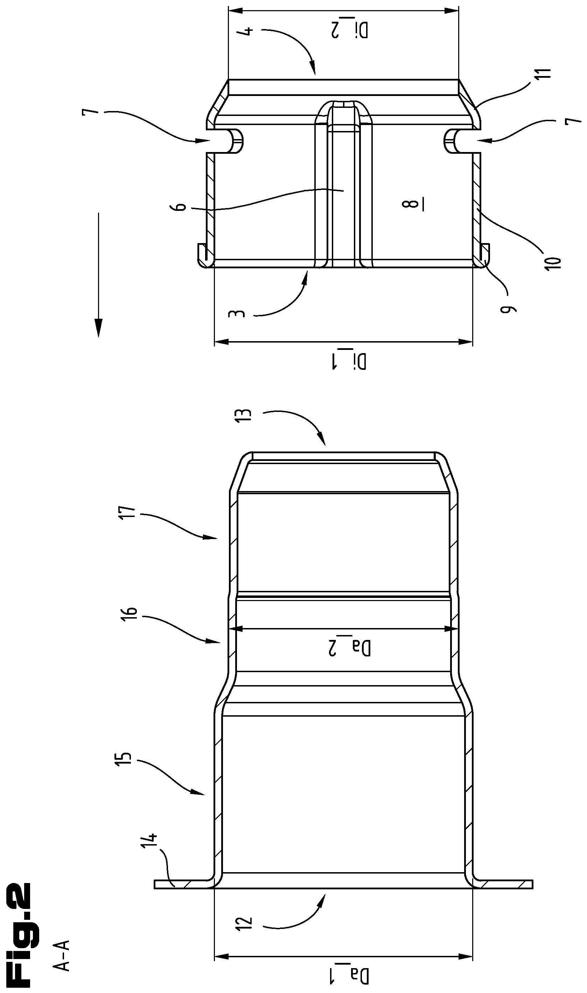

Wie in Fig.2 ersichtlich ist, kann es vorteilhaft sein, wenn die Sicherungshülse 1 im Bereich des ersten Sicherungshülsenendes 3 einen ersten Innendurchmesser di_1 aufweist und im Bereich des zweiten Sicherungshülsenendes 4 einen relativ zum ersten Innendurchmesser di_1 kleineren zweiten Innendurchmesser di_2 aufweist.

Im dargestellten Beispiel weist die Sicherungshülse 1 einen hohlzylindrischen Zentralabschnitt 10 auf, der zwischen dem ersten Sicherungshülsenende 3 und dem zweiten Hülsendende 4 liegt. Der Zentralabschnitt 10 weist eine zylindrische äußere Umfangsfläche 5 und eine zylindrische innere Umfangsfläche 8 auf. An der zylindrischen äußeren Umfangsfläche 5 ist der Verdrehsicherungsvorsprung 6 angeordnet. Die zylindrische innere Umfangsfläche 8 dient dazu, um die Sicherungshülse 1 auf die Verbindungshülse 2 aufzupressen. Im gezeigten Beispiel liegt ein überwiegender Teil des zumindest einen Verdrehsicherungsvorsprungs 6 im Bereich des Zentralabschnitts 10 und die Arretierungsausnehmung 7 ist ebenfalls im Bereich des Zentralabschnitts 10 angeordnet.

Die Sicherungshülse 1 kann zwischen dem Zentralabschnitt 10 und dem zweiten Sicherungshülsenende 4 einen Verjüngungsabschnitt 11 umfassen, der sich in Richtung des zweiten Sicherungshülsenendes 4 verjüngt. Wie in Fig.1 ersichtlich ist, kann ein dem zweiten Sicherungshülsenende 4 zugewandtes Ende des zumindest einen Verdrehsicherungsvorsprungs 6 im Bereich des Verjüngungsabschnitts 11 liegen und vom zweiten Sicherungshülsenende 4 beabstandet sein. Grundsätzlich wäre es aber ausreichend, wenn sich der Verdrehsicherungsvorsprungs 6 beispielsweise nur im Bereich des Zentralabschnitts 10 befindet.

Die Arretierungsausnehmung 7 kann als Umfangsnut ausgebildet sein, die sich in Umfangsrichtung über einen Teil des Umfangs der Sicherungshülse 1 erstreckt. Die Arretierungsausnehmung 7 kann näher am zweiten Sicherungshülsenende 4 liegen als am ersten Sicherungshülsenende 3. In der dargestellten Ausführungsform sind beispielhaft zwei Umfangsnuten vorgesehen, die diametral gegenüberliegend angeordnet sind und die sich in Umfangsrichtung jeweils über einen Teil des Umfangs erstrecken.

Im dargestellten Beispiel umfasst die Sicherungshülse 1 zwei Verdrehsicherungsvorsprünge 6, die in Umfangsrichtung voneinander beabstandet angeordnet sind, insbesondere diametral gegenüberliegend. Das ist aber nur beispielhaft zu verstehen und es könnte auch lediglich ein einziger Verdrehsicherungsvorsprung 6 vorgesehen sein. Natürlich könnten ggf. auch mehr als zwei Verdrehsicherungsvorsprünge 6 vorgesehen sein.

In analoger Weise können auch mehr als zwei Arretierungsausnehmungen 7 vorgesehen sein, die in Umfangsrichtung voneinander beabstandet angeordnet sind. Grundsätzlich wäre es aber auch denkbar, dass zwei Verdrehsicherungsvorsprünge 6 in Längsrichtung beabstandet sind und/oder dass zwei Arretierungsausnehmungen 7 in Längsrichtung beabstandet sind.

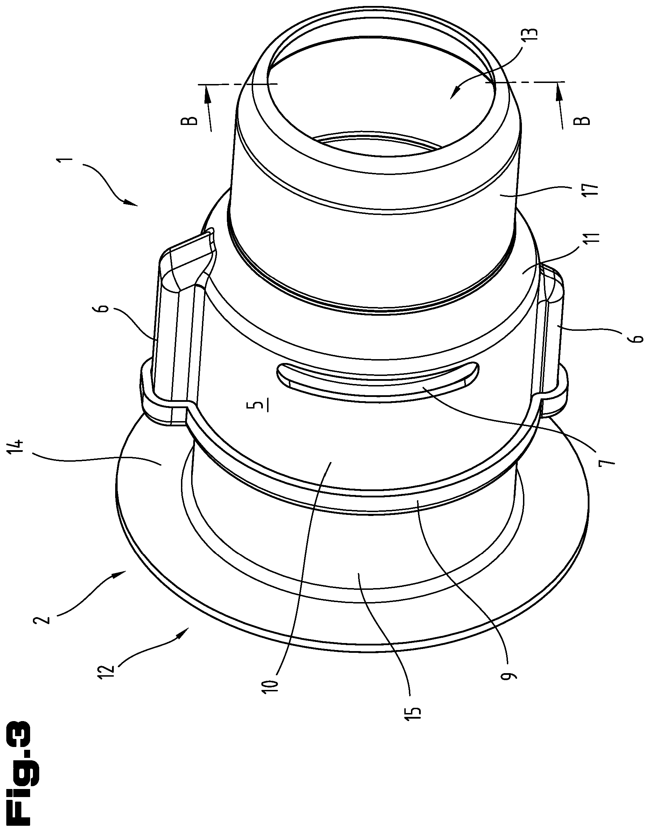

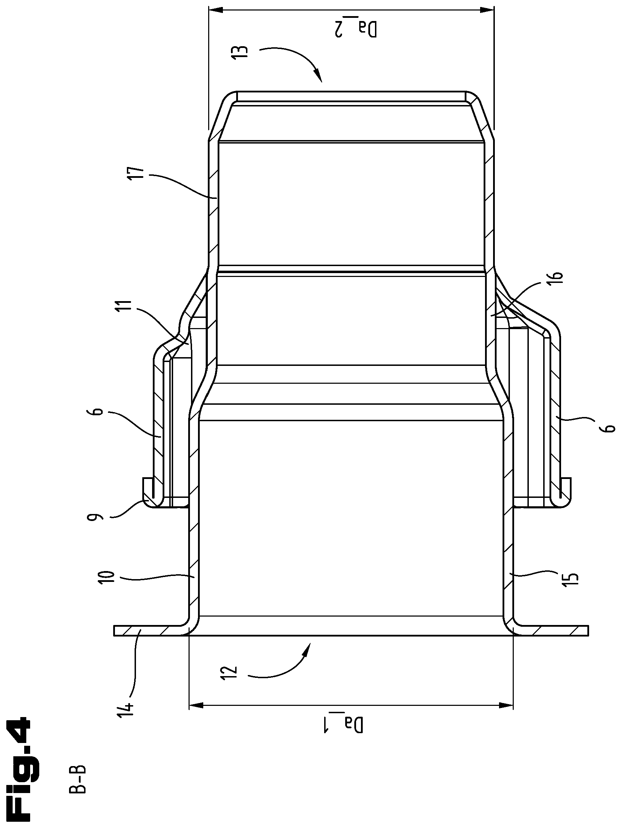

Wie bereits erwähnt wurde, kann die beschriebene Sicherungshülse 1 mit einer Verbindungshülse 2 verbunden werden, um ein Verbindungssystem auszubilden. Dazu kann die Sicherungshülse 1 an der äußeren Umfangsfläche der Verbindungshülse 2 angeordnet und derart kraftschlüssig und/oder formschlüssig mit der Verbindungshülse 2 verbunden werden, dass das erste Sicherungshülsenende 3 der Sicherungshülse 1 dem ersten Verbindungshülsenende 12 zugewandt ist, wie in Fig.3 und Fig.4 dargestellt ist. In der gezeigten Ausführungsform ist die Sicherungshülse 1 beispielhaft mittels eines Pressverbands auf die Verbindungshülse 2 aufgepresst, d.h. sowohl in axialer Richtung als auch in Umfangsrichtung kraftschlüssig mit der Verbindungshülse 2 verbunden.

Die Verbindungshülse 2 umfasst ein offenes erstes Verbindungshülsenende 12 zur Verbindung mit einem ersten (nicht dargestellten) Bauteil, z.B. einem Behälter, und ein gegenüberliegendes offenes zweites Verbindungshülsenende 13 zur Verbindung mit einem zweiten (nicht dargestellten) Bauteil, z.B. einer Rohrleitung. Das erste Verbindungshülsenende 12 und das zweite Verbindungshülsenende 13 sind über einen Innenraum verbunden. Im gezeigten Beispiel ist die Verbindungshülse 2 gerade ausgeführt, sodass der Innenraum entlang einer Geraden verläuft. Die Verbindungshülse 2 könnte aber auch gekrümmt sein und einen gekrümmten Innenraum umfassen oder abgewinkelt sein und einen abgewinkelten Innenraum umfassen.

Die Sicherungshülse 1 kann beispielsweise so an der Verbindungshülse 2 angeordnet werden, dass das erste Sicherungshülsenende 3 der Sicherungshülse 1 vom ersten Verbindungshülsenende 12 der Verbindungshülse 2 beabstandet ist und das zweite Sicherungshülsenende 4 der Sicherungshülse 1 vom zweiten Verbindungshülsenende 13 der Verbindungshülse 2 beabstandet ist, wie in Fig.3 und Fig.4 ersichtlich ist. Im dargestellten Beispiel liegt die Sicherungshülse 1 im Wesentlichen zentral zwischen dem ersten Verbindungshülsenende 12 und dem zweiten Verbindungshülsenende 13.

Wie in Fig.3 ersichtlich ist, kann die Verbindungshülse 2 am ersten Verbindungshülsenende 12 einen in radialer Richtung nach außen gerichteten zweiten Umfangskragen 14 umfassen, der die Verbindungshülse 2 in Richtung des ersten Verbindungshülsenendes 12 begrenzt. Der zweite Umfangskragen 14 erstreckt sich in Umfangsrichtung vorzugsweise um den gesamten Umfang der Verbindungshülse 2. Der zweite Umfangskragen 14 kann beispielsweise als Flansch zur Befestigung der Verbindungshülse 2 an einer Wand eines Behälters dienen.

Natürlich ist dies nur beispielhaft zu verstehen und die Verbindungshülse 2 könnte auch einen anders ausgeführten Verbindungsabschnitt aufweisen. Derartige Verbindungsabschnitte sind im Stand der Technik bekannt.

Gemäß einer vorteilhaften Ausführungsform kann die Verbindungshülse 2 einen ersten hohlzylindrischen Verbindungshülsenabschnitt 15 mit einem ersten Außendurchmesser Da_1 und einen zweiten hohlzylindrischen Verbindungshülsenabschnitt 16 mit einem, relativ zum ersten Außendurchmesser Da_1 kleineren, zweiten Außendurchmesser Da_2 umfassen. Der zweite hohlzylindrische Verbindungshülsenabschnitt 16 liegt dabei näher am zweiten Verbindungshülsenende 13 als der erste hohlzylindrische Verbindungshülsenabschnitt 15. Ggf. könnten zwischen dem zweiten Verbindungshülsenabschnitt 16 und dem zweiten Verbindungshülsenende 13 auch noch ein oder mehrere weitere Verbindungshülsenabschnitte 17 mit relativ zum zweiten Außendurchmesser Da_2 kleinerem Außendurchmesser vorgesehen sein, wie in Fig.3 und Fig.4 beispielhaft gezeigt ist.

Im dargestellten Ausführungsbeispiel ist die Sicherungshülse 1, insbesondere der hohlzylindrische Zentralabschnitt 10, auf den hohlzylindrischen ersten Verbindungshülsenabschnitt 15 der Verbindungshülse 2 aufgepresst. Der erste Innendurchmesser di_1 der Sicherungshülse 1, z.B. im Bereich des Zentralabschnitts 10, ist daher vorzugsweise geringfügig kleiner als der erste Außendurchmesser Da_1 der Verbindungshülse 2. In Abhängigkeit der Materialpaarung, der zu erwartenden Kräfte, usw. kann der Fachmann eine geeignete Toleranzpaarung für den Pressverband wählen.

Das zweite Sicherungshülsenende 4 der Sicherungshülse 1 kann im Bereich des hohlzylindrischen zweiten Verbindungshülsenabschnitts 16 der Verbindungshülse 2 liegen, wie in Fig.2 ersichtlich ist. Der zweite Innendurchmesser di_2 der Sicherungshülse 1 kann hierbei im Wesentlichen dem zweiten Außendurchmesser Da_2 des zweiten hohlzylindrischen Verbindungshülsenabschnitts 16 der Verbindungshülse 2 entsprechen.

Die Verbindungshülse 2 kann beispielsweise aus einem geeigneten Kunststoff hergestellt sein. Alternativ kann die Verbindungshülse 2 auch aus einem metallischen Werkstoff hergestellt sein. Analog wie bei der Sicherungshülse 1 kann es vorteilhaft sein, wenn die Verbindungshülse 2 ein Blechumformteil, insbesondere ein Tiefziehteil, ist. Im Gegensatz zu bekannten Verbindungssystemen können im Verbindungssystem der gegenständlichen Erfindung in vorteilhafter Weise auch verschiedene Werkstoffe für die Verbindungshülse 2 und für die Sicherungshülse 1 verwendet werden.

Die Herstellung des Verbindungssystems kann dadurch erfolgen, dass zunächst eine erfindungsgemäße Sicherungshülse 1 einer gewünschten Ausführungsform bereitgestellt wird. Zudem wird eine passende Verbindungshülse 2 mit einem offenen ersten Verbindungshülsenende 12 und einem mit dem ersten Verbindungshülsenende 12 verbundenen offenen zweiten Verbindungshülsenende 13 bereitgestellt. Danach kann die Sicherungshülse 1 an der äußeren Umfangsfläche der Verbindungshülse 2 angeordnet und derart kraftschlüssig, z.B. mittels eines Pressverbands, und/oder formschlüssig, z.B. mittels einer Nut/Feder-Verbindung, mit der Verbindungshülse 2 verbunden werden, dass das erste Sicherungshülsenende 3 der Sicherungshülse 1 dem ersten Verbindungshülsenende 12 der Verbindungshülse2 zugewandt ist.

Das Aufpressen kann mit einem geeigneten (nicht dargestellten) Presswerkzeug erfolgen. Beispielsweise kann die Verbindungshülse 2 an einer geeigneten Aufnahme in ihrer Position fixiert werden, z.B. derart, dass das zweite zweiten Verbindungshülsenende 13 vertikal nach oben ragt. Die Sicherungshülse 1 kann zunächst manuell aufgesteckt werden und danach kann mit einem geeigneten Stempel eine hinreichend große Presskraft auf die Sicherungshülse 1 ausgeübt werden, um die Pressverbindung herzustellen. Ggf. kann die Sicherungshülse 1 zuvor auch erwärmt werden, um sich temporär auszudehnen und/oder die Verbindungshülse 2 kann abgekühlt werden, um temporär zu schrumpfen.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

### Bezugszeichenaufstellung

- 1: Sicherungshülse
- 2: Verbindungshülse
- 3: Erstes Sicherungshülsenende
- 4: Zweites Sicherungshülsenende
- 5: Äußere Umfangsfläche
- 6: Verdrehsicherungsvorsprung
- 7: Arretierungsausnehmung
- 8: Innere Umfangsfläche
- 9: Erster Umfangskragen
- 10: Zentralabschnitt
- 11: Verjüngungsabschnitt
- 12: Erstes Verbindungshülsenende
- 13: Zweites Verbindungshülsenende
- 14: Zweiter Umfangskragen
- 15: Erster Verbindungshülsenabschnitt
- 16: Zweiter Verbindungshülsenabschnitt
- 17: Weiterer Verbindungshülsenabschnitt
- di_1: Erster Innendurchmesser
- di_2: Zweiter Innendurchmesser
- Da_1: Erster Außendurchmesser
- Da_2: Zweiter Außendurchmesser

## Patentansprüche

1. Sicherungshülse (1) für eine, zur Verbindung eines ersten Bauteils mit einem zweiten Bauteil ausgebildeten, Verbindungshülse (2), **dadurch gekennzeichnet, dass** die Sicherungshülse (1) ein offenes erstes Sicherungshülsenende (3) und ein mit dem ersten Sicherungshülsenende (3) verbundenes offenes zweites Sicherungshülsenende (4) aufweist, dass an einer äußeren Umfangsfläche (5) der Sicherungshülse (1) zumindest ein Verdrehsicherungsvorsprung (6) vorgesehen ist, der integral mit der Sicherungshülse (1) ausgebildet ist, wobei der Verdrehsicherungsvorsprung (6) in einer radialen Richtung von der äußeren Umfangsfläche (5) absteht und sich in einer Längsrichtung zumindest über einen Teil einer Länge der Sicherungshülse (1) erstreckt, dass die Sicherungshülse (1) zumindest eine Arretierungsausnehmung (7) umfasst, welche die äußere Umfangsfläche (5) der Sicherungshülse (1) mit einer inneren Umfangsfläche (8) verbindet, wobei die zumindest eine Arretierungsausnehmung (7) in Umfangsrichtung von dem zumindest einen Verdrehsicherungsvorsprung (6) beabstandet ist und dass die Sicherungshülse (1) dazu ausgebildet ist, an einer äußeren Umfangsfläche der Verbindungshülse (2) angeordnet und mittels einer kraftschlüssigen Verbindung und/oder einer formschlüssigen Verbindung mit der Verbindungshülse (2) verbunden zu werden.

2. Sicherungshülse (1) nach Anspruch 1, **dadurch gekennzeichnet, dass** die Sicherungshülse (1) aus einem metallischen Werkstoff ausgebildet ist oder dass die Sicherungshülse (1) aus einem Kunststoff ausgebildet ist, wobei die metallische Sicherungshülse (1) vorzugsweise ein Blechumformteil mit einer im Wesentlichen konstanten Wandstärke, ein Kaltfließpressteil oder ein Gussteil ist und wobei die aus Kunststoff ausgebildete Sicherungshülse (1) vorzugsweise ein Spritzgussteil ist.

3. Sicherungshülse (1) nach Anspruch 1 oder 2, **dadurch gekennzeichnet, dass** die Sicherungshülse (1) einteilig ausgebildet ist oder dass die Sicherungshülse (1) mehrteilig ausgebildet ist, wobei die mehrteilige Sicherungshülse (1) vorzugsweise zwei Halbschalen umfasst, die in radialer Richtung zusammensteckbar und mittels eines Verschlusses, vorzugsweise Schnappverschlusses, verbindbar sind oder die an einer Seite mittels eines Drehgelenks verbunden sind und an der gegenüberliegenden Seite mittels eines Verschlusses, vorzugsweise Schnappverschlusses, verbindbar sind.

4. Sicherungshülse (1) nach einem der Ansprüche 1 bis 3, **dadurch gekennzeichnet, dass** die Sicherungshülse (1) einen in radialer Richtung nach außen gerichteten ersten Umfangskragen (9) umfasst, der die Sicherungshülse (1) in Richtung des ersten Sicherungshülsenendes (3) begrenzt, wobei der erste Umfangskragen (9) eine, dem zweiten Sicherungshülsenende (4) zugewandte Stirnfläche aufweist.

5. Sicherungshülse (1) nach Anspruch 4, **dadurch gekennzeichnet, dass** die Sicherungshülse (1) als Blechumformteil ausgebildet ist und dass der erste Umfangskragen (9) durch eine Bördelung des ersten Sicherungshülsenendes (3) ausgebildet ist.

6. Sicherungshülse (1) nach Anspruch 4 oder 5, **dadurch gekennzeichnet, dass** der zumindest eine Verdrehsicherungsvorsprung (6) mit dem ersten Umfangskragen (9) verbunden ist.

7. Sicherungshülse (1) nach einem der Ansprüche 1 bis 6, **dadurch gekennzeichnet, dass** die kraftschlüssige Verbindung einen Kraftschluss in axialer Richtung und/oder in Umfangsrichtung umfasst, vorzugsweise einen Pressverband, und/oder dass die formschlüssige Verbindung einen Formschluss in axialer Richtung und/oder in Umfangsrichtung umfasst, vorzugsweise eine Innenpressverbindung oder Nut/Feder-Verbindung.

8. Sicherungshülse (1) nach einem der Ansprüche 1 bis 7, **dadurch gekennzeichnet, dass** die Sicherungshülse (1) im Bereich des ersten Sicherungshülsenendes (3) einen ersten Innendurchmesser (di_1) aufweist und im Bereich des zweiten Sicherungshülsenendes (4) einen relativ zum ersten Innendurchmesser (di_1) kleineren zweiten Innendurchmesser (di_2) aufweist.

9. Sicherungshülse (1) nach einem der Ansprüche 1 bis 8, **dadurch gekennzeichnet, dass** die Sicherungshülse (1) einen hohlzylindrischen Zentralabschnitt (10) umfasst, der zwischen dem ersten Sicherungshülsenende (3) und dem zweiten Hülsendende (4) liegt und dass ein überwiegender Teil des zumindest einen Verdrehsicherungsvorsprungs (6) und/oder die zumindest eine Arretierungsausnehmung (7) im Bereich des Zentralabschnitts (10) liegen.

10. Sicherungshülse (1) nach Anspruch 9, **dadurch gekennzeichnet, dass** die Sicherungshülse (1) zwischen dem Zentralabschnitt (10) und dem zweiten Sicherungshülsenende (4) einen, sich in Richtung des zweiten Sicherungshülsenendes (4) verjüngenden Verjüngungsabschnitt (11) umfasst, wobei vorzugsweise ein dem zweiten Sicherungshülsenende (4) zugewandtes Ende des zumindest einen Verdrehsicherungsvorsprungs (6) im Bereich des Verjüngungsabschnitts (11) liegt und vom zweiten Sicherungshülsenende (4) beabstandet ist.

11. Sicherungshülse (1) nach einem der Ansprüche 1 bis 10, **dadurch gekennzeichnet, dass** die zumindest eine Arretierungsausnehmung (7) als Umfangsnut ausgebildet ist, die sich in Umfangsrichtung über einen Teil des Umfangs der Sicherungshülse (1) erstreckt und/oder dass die zumindest eine Arretierungsausnehmung (7) näher am zweiten Sicherungshülsenende (4) liegt als am ersten Sicherungshülsenende (3).

12. Sicherungshülse (1) nach einem der Ansprüche 1 bis 11, **dadurch gekennzeichnet, dass** die Sicherungshülse (1) zumindest zwei Arretierungsausnehmungen (7) umfasst, die vorzugsweise in Umfangsrichtung, voneinander beabstandet, insbesondere diametral gegenüberliegend, angeordnet sind.

13. Sicherungshülse (1) nach einem der Ansprüche 1 bis 12, **dadurch gekennzeichnet, dass** die Sicherungshülse (1) zumindest zwei Verdrehsicherungsvorsprünge (6) umfasst, die vorzugsweise in Umfangsrichtung, voneinander beabstandet, insbesondere diametral gegenüberliegend, angeordnet sind.

14. Verbindungssystem zur Verbindung eines ersten fluidführenden Bauteils mit einem zweiten fluidführenden Bauteils, wobei das Verbindungssystem eine Sicherungshülse (1) nach einem der Ansprüche 1 bis 13 und eine Verbindungshülse (2) umfasst, wobei die Verbindungshülse (2) ein offenes erstes Verbindungshülsenende (12) zur Verbindung mit dem ersten Bauteil und ein mit dem ersten Verbindungshülsenende (12) verbundenes offenes zweites Verbindungshülsenende (13) zur Verbindung mit dem zweiten Bauteil umfasst, wobei die Sicherungshülse (1) an einer äußeren Umfangsfläche der Verbindungshülse (2) angeordnet und mittels einer kraftschlüssigen Verbindung und/oder einer formschlüssigen Verbindung mit der Verbindungshülse (2) verbunden ist, wobei das erste Sicherungshülsenende (3) der Sicherungshülse (1) dem ersten Verbindungshülsenende (12) zugewandt ist.

15. Verbindungssystem nach Anspruch 14, **dadurch gekennzeichnet, dass** das erste Sicherungshülsenende (3) der Sicherungshülse (1) vom ersten Verbindungshülsenende (12) der Verbindungshülse (2) beabstandet ist und das zweite Sicherungshülsenende (4) der Sicherungshülse (1) vom zweiten Verbindungshülsenende (13) der Verbindungshülse (2) beabstandet ist.

16. Verbindungssystem nach Anspruch 14 oder 15, **dadurch gekennzeichnet, dass** die Verbindungshülse (2) am ersten Verbindungshülsenende (12) einen in radialer Richtung nach außen gerichteten zweiten Umfangskragen (14) umfasst, der die Verbindungshülse (2) in Richtung des ersten Verbindungshülsenendes (12) begrenzt, wobei die Verbindungshülse (2) vorzugsweise ein metallischer Tiefziehteil ist.

17. Verbindungssystem nach einem der Ansprüche 14 bis 16, **dadurch gekennzeichnet, dass** die Verbindungshülse (2) einen ersten hohlzylindrischen Verbindungshülsenabschnitt (15) mit einem ersten Außendurchmesser (Da_1) und einen zweiten hohlzylindrischen Verbindungshülsenabschnitt (16) mit einem, relativ zum ersten Außendurchmesser (Da_1) kleineren, zweiten Außendurchmesser (Da_2) umfasst, wobei der zweite Verbindungshülsenabschnitt (16) näher am zweiten Verbindungshülsenende (13) liegt als der erste Verbindungshülsenabschnitt (15) und dass die Sicherungshülse (1) mit dem ersten Verbindungshülsenabschnitt (15) verbunden ist.

18. Verbindungssystem nach Anspruch 17, **dadurch gekennzeichnet, dass** die Sicherungshülse (1) nach Anspruch 8 ausgebildet ist, wobei das zweite Sicherungshülsenende (4) der Sicherungshülse (1) im Bereich des zweiten Verbindungshülsenabschnitts (16) der Verbindungshülse (2) liegt und dass der zweite Innendurchmesser (di_2) der Sicherungshülse (1) im Wesentlichen dem zweiten Außendurchmesser (Da_2) des zweiten Verbindungshülsenabschnitts (16) der Verbindungshülse (2) entspricht.

19. Verbindungssystem nach einem der Ansprüche 14 bis 18, **dadurch gekennzeichnet, dass** die Verbindungshülse (2) aus einem Kunststoff hergestellt ist oder dass die Verbindungshülse (2) aus einem metallischen Werkstoff hergestellt ist, wobei die Verbindungshülse (2) vorzugsweise ein Blechumformteil ist.

20. Verfahren zur Herstellung eines Verbindungssystems zur Verbindung eines ersten fluidführenden Bauteils mit einem zweiten fluidführenden Bauteils, **dadurch gekennzeichnet, dass** folgende Schritte durchgeführt werden:
- Bereitstellung einer Sicherungshülse (1) nach einem der Ansprüche 1 bis 13,
- Bereitstellung einer Verbindungshülse (2) mit einem offenen ersten Verbindungshülsenende (12) und einem mit dem ersten Verbindungshülsenende (12) verbundenen offenen zweiten Verbindungshülsenende (13),
- Anordnen der Sicherungshülse (1) an einer äußeren Umfangsfläche der Verbindungshülse (2) und kraftschlüssiges und/oder formschlüssiges Verbinden der Sicherungshülse (1) mit der Verbindungshülse (2) derart, dass das erste Sicherungshülsenende (3) der Sicherungshülse (1) dem ersten Verbindungshülsenende (12) der Verbindungshülse(2) zugewandt ist.
